# EUROPEAN PATENT SPECIFICATION

(11) **EP 1 734 796 B1**
(45) Date of publication and mention of the grant of the patent: **29.04.2009**
(21) Application number: 06114949.8
(22) Date of filing: 02.06.2006
(51) Int. Cl.: H05B 41/282, G09G 3/36

(54) **Display apparatus and power supplying apparatus for lamp unit thereof**
Anzeigegerät und Energieversorgungsgerät für eine Lampeneinheit damit
Appareil d'affichage et appareil d'alimentation en courant pour unité de lampe correspondante

(30) Priority: 07.06.2005 KR 2005048608
(43) Date of publication of application: 20.12.2006
(73) Proprietor: SAMSUNG ELECTRONICS CO., LTD., Suwon-si, Gyeonggi-do (KR)
(72) Inventor: Park, Cheol-jin, Yeongtong-gu Gyeonggi-do Suwon-si (KR)
(74) Representative: Waddington, Richard

(56) References cited:
- US-A- 6 144 360
- US-A1- 2004 051 692
- US-A1- 2004 232 853
- US-A1- 2004 240 235

## Description

The present invention relates to a display apparatus. More particularly, the present invention relates to a display apparatus having an improved structure for applying a high voltage to a lamp unit.

Generally, a display apparatus receives a video signal of a predetermined display mode from a video signal source such as a computer or a television broadcasting system. The video signal is then displayed as a picture. Display apparatuses have gradually developed from a cathode ray tube (CRT). Currently there is a growing trend toward flat panel displays. Flat panel displays generally use a liquid crystal display (LCD) panel or a plasma display panel (PDP).

In particular, a general display apparatus employing the LCD panel is lightweight, thin, and consumes less power. Therefore, the LCD panel has been widely used in capacities such as office automation equipment and audio/video devices. The display apparatus employing the LCD panel cannot emit light by itself. A separate light source, such as a backlight unity is required. Thus, the LCD panel displays a picture using light emitted from the backlight unit. Examples of light sources for backlight units are a cold cathode fluorescent lamp (CCFL), an extra electrode fluorescent lamp (EEFL), and a flat fluorescent lamp (FFL).

US 2004/051692 discloses a display having a transformer immediately adjacent to a display panel.

An aspect of the embodiments of the present invention is to address at least the above problems and/or disadvantages and to provide at least the advantages described below.

The present invention provides a display apparatus in which a high voltage generating position for a lamp unit changes to reduce the length of an electric wire through which a high voltage is supplied,thereby minimizes current leakage.

According to the present invention there is provided an apparatus and method as set forth in the appended claims. Preferred features of the invention will be apparent from the dependent claims, and the description which follows.

Other aspects, advantages, and salient features of the exemplary embodiments of the invention will become apparent to those skilled in the art from the following detailed description, which, taken in conjunction with the annexed drawings, discloses exemplary embodiments of the invention.

For a better understanding of the invention, and to show how embodiments of the same may be carried into effect, reference will now be made, by way of example, to the accompanying diagrammatic drawings in which:
FIG. 1 is an exploded perspective view of a display apparatus according to an embodiment of the present invention;
FIG. 2 is a rear perspective view of a back casing of a display apparatus according to a first embodiment of the present invention;
FIG. 3 is a layout view of a back casing of a display apparatus according to a second embodiment of the present invention;
FIG. 4 is a layout view of a back casing of a display apparatus according to a third embodiment of the present invention; and
FIG. 5 is a partial sectional view of the back casing of the display apparatus according to an embodiment of the present invention.

Throughout the drawings, the same drawing reference numerals will be understood to refer to the same elements, features, and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

To supply high voltages to the lamp units described in the introduction, the conventional display apparatus employs a transformer in an inverter to boost up voltage and supplies the high voltage to the lamp unit through a long electric wire. However, in the conventional display apparatus, while the boosted high voltage is supplied through the long electric wire, current leakage may occur.

Accordingly, there is a need for an improved display apparatus which minimizes current leakage.

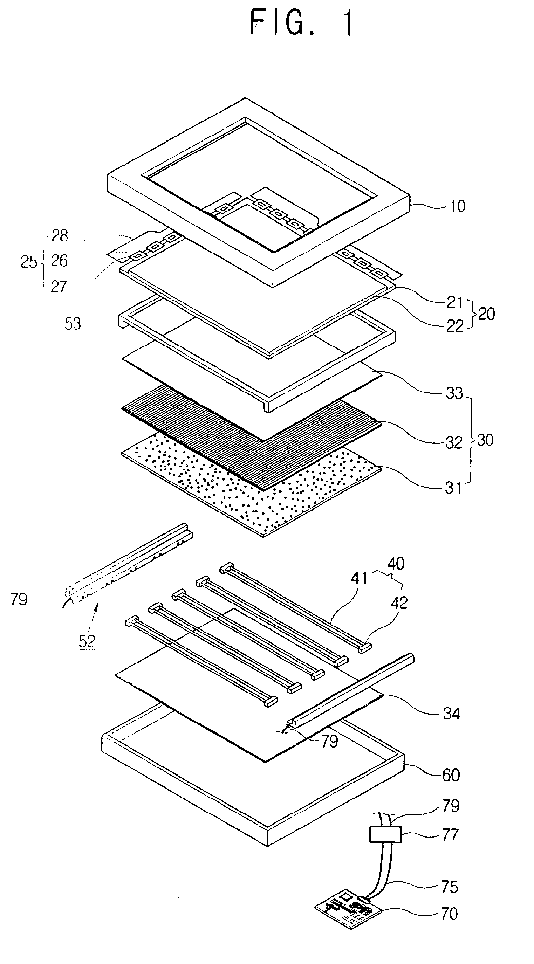

As shown in FIG. 1, a display apparatus according to an embodiment of the present invention includes an LCD panel 20, a plurality of optical films 31, 32, 33 placed in the rear of the LCD panel 20, a lamp unit 40 provided throughout the rear of the LCD panel 20, a reflecting plate 34 placed in the rear of the lamp unit 40, and a lamp mold 52 which are accommodated between a front casing 10 and a rear casing 60.

The LCD panel 20 includes a thin film transistor (TFT) substrate 21 mounted with TFTs, a color filter substrate 22 opposite to the TFT substrate 21, a sealant (not shown) coupling two substrates 21 and 22 with each other forming a cell gap, and a liquid crystal layer (not shown) interposed between two substrates 21 and 22 and the sealant. The LCD panel 20 rearranges an orientation of molecular arrangement of the liquid crystal layer to display a picture, but cannot emit light by itself. Therefore, the LCD panel 20 should receive the light from the lamp unit 40 placed in the rear thereof. Meanwhile, a driving unit 25 is provided on one side of the TFT substrate 21 and applies a driving signal. The driving unit 25 includes a flexible printed circuit (FPC) 26, a driving chip 27 mounted on the FPC 26, and a printed circuit board (PCB) 28 connected to the FPC 26. In this embodiment, the driving unit 25 comprises a chip on film (COF), but is not limited thereto, and other suitable arrangements maybe used. Alternatively, a tape carrier package (TCP), a chip on glass (COG), and other well known types of driving units 25 can be used. Further, the driving unit 25 may be embedded on the TFT substrate 21.

The optical films 31, 32, 33 placed in the rear of the LCD panel 20 include a diffusion film 31 diffusing the light emitted from the lamp unit 40 toward the LCD panel 20. A prism film 32 focuses the light diffused by the diffusion film 31 in a direction perpendicular to a plane of the LCD panel 20 and a protection film 33 protects the prism film 32 that is relatively easily affected by scratches.

The lamp unit 40 includes a lamp body 41 to emit light and a lamp electrode part 42 provided in at least one of opposite ends of the lamp body 41 to receive an electric power. In this exemplary embodiment, the lamp unit 40 employs a CCFL and is provided as a direct type. Alternatively, the lamp unit 40 may employ lamp units 40 such as an EEFL or FFL. Further, the lamp unit 40 may be provided as an edge type instead of the direct type

The lamp unit 40 is placed between the lamp molds 52 by an accommodating groove formed in the lamp mold 52. Here, the lamp mold 52 forms a pair at opposite sides of the LCD panel 20 and surrounds the opposite ends of the lamp unit 40. Further, the lamp mold 52 can support the optical films 31, 32, 33.

The reflection plate 34 is placed in the rear of the lamp unit 40 and reflects the light from the lamp unit 40 toward the diffusion film 31. Here, the reflection plate 34 can be made of polyethylene terephthalate (PET) or poly carbonate (PC).

The LCD panel 20, the optical film 30, the lamp unit 40, and the reflection plate 34 are accommodated between the front casing 10 and the rear casing 60.

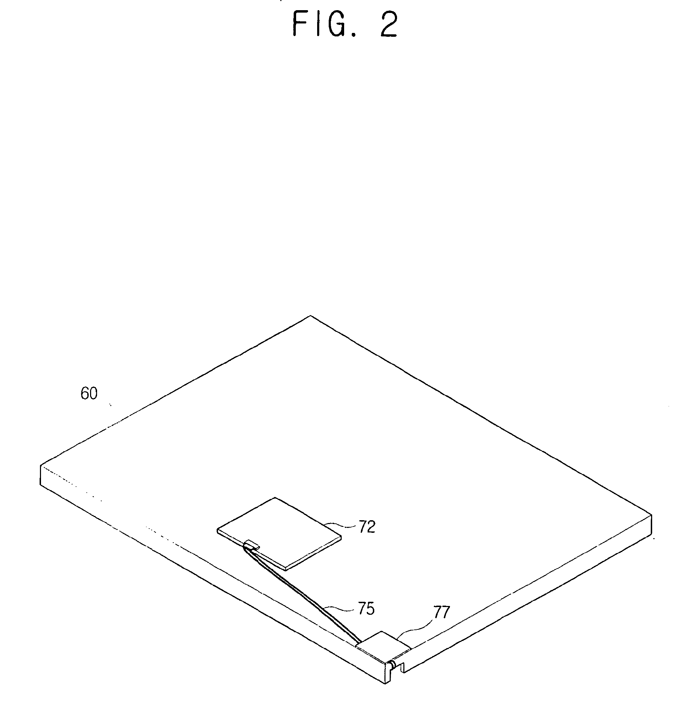

Meanwhile, as shown in FIG. 2, an inverter 72 and a transformer 77 are provided in the back of the rear casing 60 so as to supply a driving power to the lamp unit 40.

The inverter 72 receives the electric power from an external or internal battery and supplies it to the transformer 77. The inverter 72 is placed on the back of the rear casing 60 corresponding to lamp unit 40.

The inverter 72 converts DC powder into AC power, and supplies the AC power to the external transformer 77 through an electric wire 75.

According to an embodiment of the present invention, the inverter 72 is internally provided in a power supply 70. In this embodiment, the power supply 70 is of a switching mode power supply (SMPS) that converts a low frequency AC power received from the exterior into high frequency DC power.

The transformer 77 is adjacent to the lamp electrode part 42 and boosts up a voltage of the electric power supplied from the inverter 72. Thus, the electric power is supplied as the driving power for the lamp unit 40 through the electric wire 79. For example, the transformer 77 receives the electric power having a voltage of 120V from the inverter 72 and the transformer 77 boosts up the voltage into a voltage of 1000V.

Here, the transformer 77 is adjacent to the lamp unit 40, so that the length of the electrics 79 is very short.

According to a first embodiment of the present invention, as shown in FIG. 2, the transformer 77 is placed corresponding to one lamp electrode part 42, leaving the rear casing 60 between the transformer 77 and the lamp unit 40. Herein, the rear casing 60 accommodates the lamp unit 40 in a position opposite to the LCD panel 20.

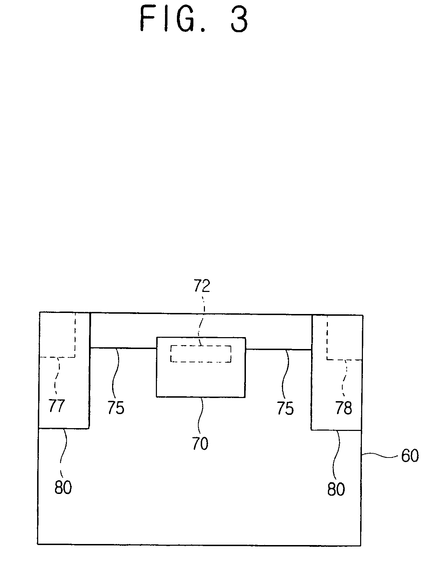

According to a second embodiment of the present invention, as shown in FIG. 3, a transformer consists of a first transformer 77 and a second transformer 78, which are adjacent to the lamp electrode parts 42 provided in the opposite ends of the lamp unit 40, respectively. Here, the first and second transformers 77 and 78 according to the second embodiment can be placed corresponding to the respective lamp electrode parts 42 like those of the first embodiment.

In the second embodiment, the inverter 72 is provided as a single unit and outputs the electric power to both the transformers 77 and 78. Alternatively, the inverter 72 can be provided as two units to output the electric power to the first and second transformers 77 and 78, respectively.

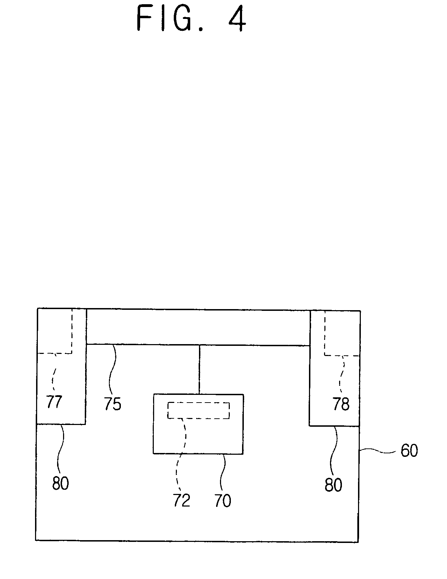

According to a third embodiment of the present invention, as shown in FIG. 4, a transformer consists of a first transformer 77 and a second transformer 78, which are adjacent to the lamp electrode parts 42, respectively. Here, the first and second transformers 77 and 78 according to the third embodiment can be placed corresponding to the respective lamp electrode parts 42 like those of the first and second embodiments. Also, the electric power output from the inverter 72 is branched and supplied to the first and second transformers 77 and 78 placed corresponding to the respective lamp electrode parts 42.

In a case that the lamp unit 40 includes a plurality of lamps and the lamps are driven in parallel, a balance unit 80 is provided for adjusting a current of the electric power applied to each lamp (refer to FIG. 3). Moreover, the transformer 77 can be provided inside the balance unit 80. Alternatively, the transformer 77 may be provided outside the balance unit 80 as long as it is adjacent to the lamp electrode part 42. Here, the balance unit 80 is shown in FIGS. 3 and 4, but not limited to the configuration of FIGS. 3 and 4. Alternatively, the balance unit 80 can be provided in other configurations as long as the lamps are driven in parallel.

In the case that the display apparatus according to an embodiment of the present invention includes the first and second transformers 77 and 78 as described above, the second transformer 78 can be connected to the first transformer 77 in parallel between the inverter 72 and the lamp unit 40 (refer to FIG. 4), or receive the electric power from a separate inverter from the inverter 72 for supplying the electric power to the first transformer 77. Further, the current supplied to the lamp unit 40 via the second transformer 78 has a phase difference of 180 degrees from the current output from the first transformer 77. Thus, a differential driving method is applied so that the currents are output from the first and second transformers 77 and 78 in opposite phases. Thus, the amount of current is increased and supplied to the lamp unit 40. Here, the differential driving method is suitable for supplying much current to the lamp shaped like an elongated tube.

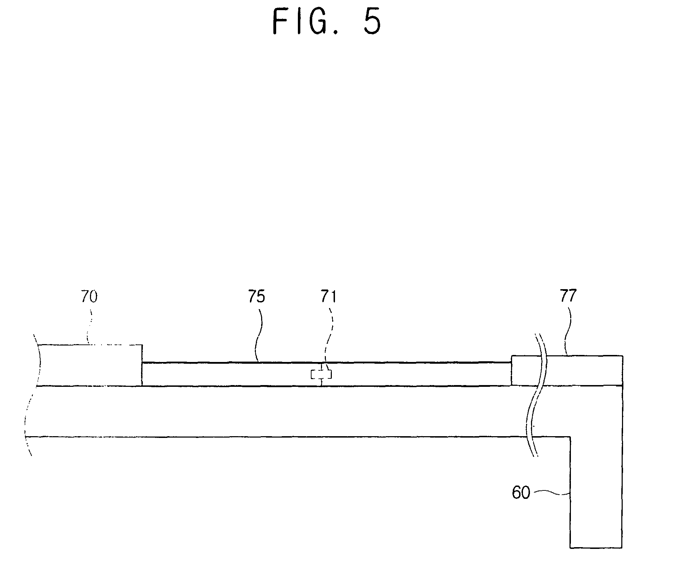

In the display apparatus according to an embodiment of the present invention, the electric wire 75, through which the electric power is supplied from the inverter 72, is connected adjacent to the rear casing 60. At this time, the capacitor is formed between the electric wire 75 and the rear casing 60. Hereinafter, the foregoing capacitor will be called a virtual capacitor 71 (refer to FIG. 5). In FIG. 5, one virtual capacitor is illustrated, but not limited thereto. Alternatively, a plurality of virtual capacitors may be provided.

The conventional display apparatus has the long electric wire for supplying the high voltage. Thus, current leaks due to the virtual capacitor 71. The higher the voltage applied to the virtual capacitor 71, the larger the capacitance C of the virtual capacitor 71. Therefore, the current leakage in the virtual capacitor 71 increases as the capacitance C of the virtual capacitor 71 gets larger. Additionally, power loss increases.

On the other hand, in the display apparatus according to an embodiment of the present invention, the electric wire 79 for supplying the high voltage is very close to the lamp electrode part 42, so that the length of the electric wire 79 is relatively short. Therefore, current leakage can be minimized. Further, the electric wire 75 for supplying the low voltage is relatively long, but current scarcely leaks in the electric wire 75 because the capacitance C of the virtual capacitor 71 is very small.

Particularly, the power loss in the virtual capacitor 71 can be obtained by the following equation: W = 1/2×C×V². The display apparatus according to an embodiment of the present invention has very small "C" and "V" as compared with the conventional display apparatus. Thus, power loss also decreases.

As described above, in the display apparatus according to an embodiment of the present invention, the electric wire 79 for supplying the high voltage is shortened, thereby decreasing current leakage. Therefor, the electric power output from the inverter 72 is not lost while being supplied to the lamp unit 40. Thus, the efficiency of the inverter 72 increases.

As described above, the embodiments of the present invention provides a display apparatus, in which a high voltage generating position for a lamp unit changes to reduce the length of an electric wire through which a high voltage is supplied.

Further, the embodiments of the present invention provides a display apparatus, in which an electric wire for supplying a high voltage is shortened to reduce the amount of current leakage, thereby enhancing the efficiency of supplying electric power to a lamp unit.

## Claims

1. A display apparatus with a panel (20) on a front face of the apparatus to display a picture thereon, comprising:
an inverter (72) to convert DC power into AC power;
at least one lamp unit (40) comprising a lamp body (41) and a lamp electrode part (42) provided in at least one of opposite ends of the lamp body (41) to receive an electric power;
a transformer (77) arranged adjacent to the lamp electrode part (42) which is adapted to boost up a voltage of the electric power output from the inverter (72) to supply the electric power with the boosted voltage as a driving power to the lamp unit (40); and
a rear casing (60) at rear face of the display apparatus to accommodate the lamp unit (40) in a position at an opposite face to the panel (20) ; **characterised in that** the position of the transformer (77) is arranged to correspond to the position of the lamp electrode part (42) so that the rear casing (60) is arranged between the transformer (77) and the lamp unit (40).

2. The display apparatus according to claim 1, further comprising a balance unit (80) adapted to adjust a current of the electric power applied to each lamp unit (40)

3. The display apparatus according to claim 2, wherein the inverter (72) is provided in the balance unit (80).

4. The display apparatus according to any preceding claim, wherein the transformer (77) comprises a first transformer (77) and a second transformer (78), and the first transformer (77) is connected to the second transformer (78) in parallel to boost up the voltage output from the inverter (72), and to supply an electric power having a current which has a phase difference of 180 degrees from the current of the electric power supplied from the second transformer (78) to the lamp unit (40).

5. display apparatus according to claim 4, wherein the inverter (72) comprises a first inverter (72) to supply the AC power to the first transformer (77), and a second inverter to supply the AC power to the second transformer (78).

6. The display apparatus according to any preceding claim, further comprising a power supply comprising the inverter (72).

7. The display apparatus according to any preceding claim, wherein the lamp comprises at least one of a CCFL, an EEFL and an FFL.

## Patentansprüche

1. Anzeigegerät mit einer Tafel (20) auf einer Vorderseite des Geräts zur Anzeige eines Bilds darauf, umfassend:
einen Wandler (72) zum Umwandeln von Gleichstrom in Wechselstrom;
mindestens eine Lampeneinheit (40), umfassend einen Lampenkörper (41) und einen in mindestens einem von gegenüberliegenden Enden des Lampenkörpers (41) vorgesehenen Lampenelektrodenteil (42) zum Empfangen von elektrischer Energie;
einen neben dem Lampenelektrodenteil (42) angeordneten Transformator (77), der dazu ausgelegt ist, eine Spannung des Ausgangs der elektrischen Energie von dem Wandler (72) zu erhöhen, um die elektrische Energie mit der erhöhten Spannung als Antriebskraft zur Lampeneinheit (40) zu führen; und
ein hinteres Gehäuse (60) an einer Hinterseite des Anzeigegeräts zur Unterbringung der Lampeneinheit (40) in einer Position an einer der Tafel (20) gegenüberliegenden Seite;
**dadurch gekennzeichnet, dass**
die Position des Transformators (77) so angeordnet ist, dass sie der Position des Lampenelektrodenteils (42) entspricht, so dass das hintere Gehäuse (60) zwischen dem Transformator (77) und der Lampeneinheit (40) angeordnet ist.

2. Anzeigegerät nach Anspruch 1, ferner umfassend eine Ausgleichseinheit (80), die dazu ausgelegt ist, einen Strom der an jeder Lampeneinheit (40) angelegten elektrischen Energie einzustellen.

3. Anzeigegerät nach Anspruch 2, wobei der Wandler (72) in der Ausgleichseinheit (80) vorgesehen ist.

4. Anzeigegerät nach einem der vorhergehenden Ansprüche, wobei der Transformator (77) einen ersten Transformator (77) und einen zweiten Transformator (78) umfasst und der erste Transformator (77) mit dem zweiten Transformator (78) parallelgeschaltet ist, um den Spannungsausgang von dem Wandler (72) zu erhöhen und um elektrische Energie zuzuführen, die einen Strom mit einer Phasendifferenz von 180 Grad vom Strom der vom zweiten Transformator (78) zur Lampeneinheit (40) zugeführten elektrischen Energie aufweist.

5. Anzeigegerät nach Anspruch 4, wobei der Wandler (72) einen ersten Wandler (72) zum Zuführen des Wechselstroms zum ersten Transformator (77) und einen zweiten Wandler zum Zuführen des Wechselstroms zum zweiten Transformator (78) umfasst.

6. Anzeigegerät nach einem der vorhergehenden Ansprüche, ferner umfassend eine den Wandler (72) umfassende Energieversorgung.

7. Anzeigegerät nach einem der vorhergehenden Ansprüche, wobei die Lampeneinheit eine CCFL, eine EEFL und/oder eine FFL umfasst.

## Revendications

1. Appareil d'affichage dont une face avant comporte un panneau (20) permettant d'y afficher une image, comprenant :
un onduleur (72) destiné à convertir une alimentation en courant continu en une alimentation en courant alternatif ;
au moins une unité de lampe (40) comprenant un corps de lampe (41) et une pièce d'électrode de lampe (42) montée à au moins une parmi des extrémités opposées du corps de lampe (41) pour recevoir une alimentation électrique ;
un transformateur (77) agencé en position adjacente à la pièce d'électrode de lampe (42) et conçu pour relever une tension de l'alimentation électrique délivrée par l'onduleur (72) pour fournir l'alimentation électrique à tension relevée à l'unité de lampe (40) sous forme d'une alimentation d'excitation ; et
un châssis arrière (60) au niveau d'une face arrière de l'appareil d'affichage destiné à recevoir l'unité de lampe (40) dans une position au niveau d'une face opposée au panneau (20) ;
l'appareil d'affichage étant **caractérisé en ce que** la position du transformateur (77) est agencée pour correspondre à la position de la pièce d'électrode de lampe (42) de manière à ce que le châssis arrière (60) soit agencé entre le transformateur (77) et l'unité de lampe (40).

2. Appareil d'affichage selon la revendication 1, comprenant en outre une unité d'équilibrage (80) conçue pour ajuster un courant de l'alimentation électrique appliquée à chaque unité de lampe (40).

3. Appareil d'affichage selon la revendication 2, l'onduleur (72) étant monté dans l'unité d'équilibrage (80).

4. Appareil d'affichage selon l'une quelconque des revendications précédentes, le transformateur (77) comprenant un premier transformateur (77) et un deuxième transformateur (78), et le premier transformateur (77) étant monté en parallèle avec le deuxième transformateur (78) pour relever la tension délivrée par l'onduleur (72) et pour fournir une alimentation électrique possédant un courant déphasé de 180 degrés par rapport au courant de l'alimentation électrique fournie par le deuxième transformateur (78) à l'unité de lampe (40).

5. Appareil d'affichage selon la revendication 4, l'onduleur (72) comprenant un premier onduleur (72) destiné à fournir l'alimentation en courant alternatif au premier transformateur (77), et un deuxième onduleur destiné à fournir l'alimentation en courant alternatif au deuxième transformateur (78).

6. Appareil d'affichage selon l'une quelconque des revendications précédentes, comprenant en outre une alimentation en courant comprenant l'onduleur (72).

7. Appareil d'affichage selon l'une quelconque des revendications précédentes, l'unité de lampe comprenant au moins une lampe parmi une lampe CCFL, une lampe EEFL et une lampe FFL.
